# EUROPÄISCHE PATENTSCHRIFT

(11) **EP 1 502 638 B1**
(45) Veröffentlichungstag und Bekanntmachung des Hinweises auf die Patenterteilung: **21.02.2007**
(21) Anmeldenummer: 04016953.4
(22) Anmeldetag: 19.07.2004
(51) Int. Cl.: B01D 29/39, B01D 29/74, B01D 33/25

(54) **Filtereinrichtung und Verfahren zur Filtration eines strömenden Fluides**
Filter device and method for filtering a moving fluid
Dispositif de filtration et méthode pour filtrer un fluide en mouvement

(30) Priorität: 21.08.2003 DE 10338836; 31.07.2003 DE 10335593
(43) Veröffentlichungstag der Anmeldung: 02.02.2005
(73) Patentinhaber: Atech Innovations GmbH, 45966 Gladbeck (DE)
(72) Erfinder: Bolduan, Peter, 49549 Ladbergen (DE)
(74) Vertreter: Gesthuysen, von Rohr & Eggert

(56) Entgegenhaltungen:
- EP-A- 0 947 230
- WO-A-96/23570
- FR-A- 1 108 828
- GB-A- 1 440 593
- US-B1- 6 368 512

## Beschreibung

Die Erfindung betrifft eine Filtereinrichtung nach dem Oberbegriff von Anspruch 1.

Aus der GB-A-1 440 593 sind unterschiedliche Ausführungsformen von Filtereinrichtungen zur Filtration eines Fluides bekannt. Bei einer Ausführungsform sind plattenförmige Filterelemente über den Umfang eines Trägers propellerförmig verteilt angeordnet und mit einem Ende auf dem Träger gelagert. Die Mantelflächen der Filterelemente und die Rotationsachse des Trägers sind in einer gemeinsamen Ebene angeordnet. Darüber weisen die Filterelemente einen rechteckförmigen Querschnitt auf. Die Filterelemente erstrecken sich in radialer Richtung ausgehend von dem Träger in einen den Träger umgebenden Rotationsraum.

Zum Abtrag des bei der Filtration auf der Oberfläche von Filtern gebildeten Filterkuchens ist es aus dem Stand der Technik bekannt, den Filter mit einem Fluid zu überströmen, um dadurch den Filterkuchen von der Oberfläche abzulösen. Die Strömung wird durch Umpumpen großer Flüssigkeitsvolumina erreicht. Je höher die Strömungsgeschwindigkeit ist, desto größer sind die Scherkräfte an der Oberfläche der Filteroberfläche, wobei die Scherkräfte dem Verblocken der Filterschicht durch den bei der Filtration gebildeten Filterkuchen entgegenwirken. Die hohen Strömungsgeschwindigkeiten zur Erzeugung der notwendigen Scherkräfte erfordern einen hohen Energieaufwand. Dies wirkt sich nachteilig auf die Betriebskosten aus.

Aus der DE 244 739 ist eine Filtereinrichtung bekannt, wobei Filterrahmen eingesetzt werden, die aus mit einem perforierten Filtertuch und Filterpackungsmaterial versehenen Rohren bestehen, wobei jeder Filterrahmen und die Rotationsachse des Trägers der Filterrahmen jeweils in einer gemeinsamen Ebene angeordnet sind.

Zur Vermeidung hoher Betriebskosten ist es aus der DE 100 19 672 A1 schließlich bekannt, scheibenförmige Filterelemente auf einer Hohlwelle rotierend in einem Filtergehäuse anzuordnen. Nachteilig ist allerdings, daß die Herstellung der scheibenförmigen Filterelemente relativ aufwendig ist. Darüber hinaus bieten scheibenförmige Filterelemente nur eine vergleichsweise geringe spezifische Filteroberfläche, so daß entsprechend viele Filterscheiben zur Filtration in einer Filtervorrichtung vorgesehen sein müssen. Darüber hinaus bereitet die Festigkeit der scheibenförmigen Filterelemente und deren Abdichtung auf der Hohlwelle Probleme.

Aufgabe der vorliegenden Erfindung ist es, eine Filtereinrichtung mit den Oberbegriffsmerkmalen von Anspruch 1 zur Verfügung zu stellen, die über einen längeren Zeitraum mit gleichbleibend hoher Filtrationsleistung betrieben werden kann.

Die vorstehende Aufgabe wird erfindungsgemäß bei einer gattungsgemäßen Filtereinrichtung durch die Merkmale von Anspruch 1 gelöst.

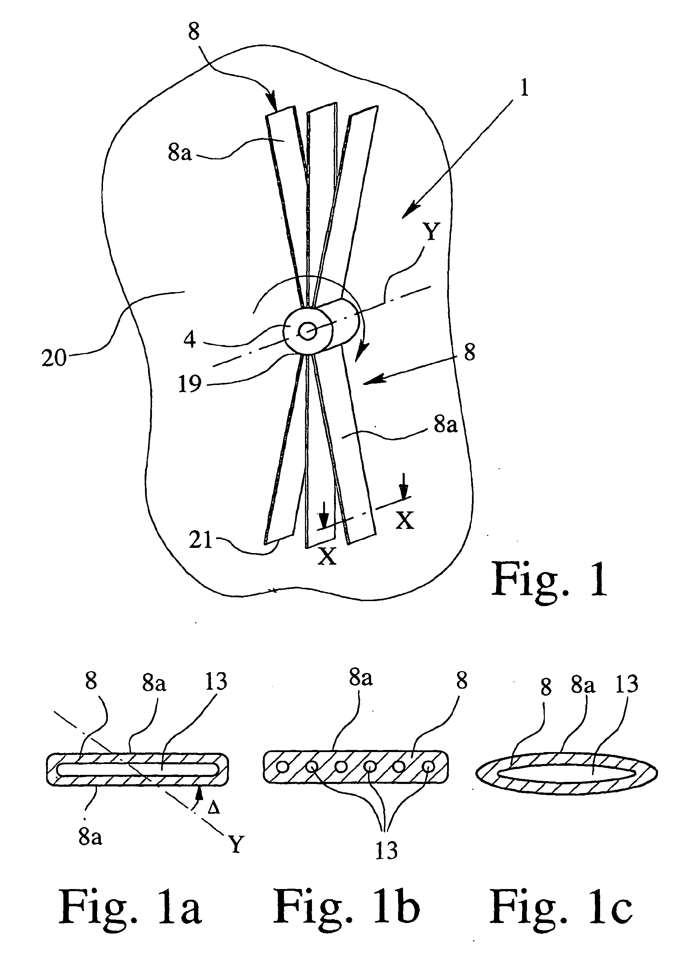

Die Vorteile der Erfindung werden nachfolgend anhand der Zeichnung exemplarisch erläutert. Dabei zeigen
- Fig. 1: eine perspektivische Ansicht einer Filtereinrichtung mit propellerförmiger Anordnung der Filterelemente und
- Fig. 1a-c: Filterelemente mit in radialer Richtung rechteckiger oder tragflächenförmiger Querschnittsform.

In Fig. 1 ist eine Filtereinrichtung 1 dargestellt, wobei die Filterelemente 8 mit einem Ende 19 auf einem als Hohlwelle 4 ausgebildetem Träger gelagert bzw. mit diesem verbunden sind und wobei sich die Filterelemente 8 in radialer Richtung ausgehend von der Hohlwelle 4 in einen die Hohlwelle 4 umgebenden Rotationsraum 20 erstrecken. Bei dem Rotationsraum 20 handelt es sich um den Bereich des zu filtrierenden Fluides, der bei der Rotation der Hohlwelle 4 durch die rotierenden Filterelemente 8 durchmischt wird bzw. dem eine Querströmung durch die Rotation der Filterelemente 8 aufgezwungen wird. Wenngleich in Fig. 1 die Filterelemente 8 unmittelbar auf der Hohlwelle 4 gelagert bzw. mit dieser verbunden sind, ist es ebenso gut möglich, daß die Filterelemente 8 auf einem Verbindungselement gelagert bzw. mit diesem verbunden sind, wobei das Verbindungselement seinerseits auf der Hohlwelle 4 gelagert wird. Die einseitige Einspannung der Filterelemente 8 in der Hohlwelle 4 trägt zu einem einfachen Aufbau der Filtereinrichtung 1 bei.

Die Filterelemente 8 sind vorzugsweise bereichsweise über den Umfang der Hohlwelle 4 verteilt angeordnet, so daß sich eine propellerförmige Anordnung der Filterelemente 8 auf der Hohlwelle 4 ergibt. Gemäß der in Fig. 1 dargestellten Ausführungsform sind jeweils drei Filterelemente 8 gegenüberliegend auf der Umfangsfläche der Hohlwelle 4 angeordnet. Bei der Rotation der Filterelemente 8 in dem Rotationsraum 20 des zu filtrierenden Fluides kommt es dabei durch die Verdrängung des Fluides zu einer besonders intensiven Durchmischung des Fluides. Der hohe Querstromeffekt der propellerförmigen Anordnung trägt zu einer hohen Filtrationsleistung der Filtereinrichtung 1 bei. Grundsätzlich ist es jedoch auch möglich, daß die Filterelemente 8 über den gesamten Umfang der Hohlwelle 4 umlaufend verteilt angeordnet sind, so daß sich eine im wesentlichen speichenförmige Anordnung der Filterelemente 8 auf der Hohlwelle 4 ergibt. Die Anzahl der Filterelemente 8 ist dabei nicht auf sechs Filterelemente beschränkt. Grundsätzlich ist jede Zahl beispielsweise zwischen 4 und 30 Filterelementen möglich.

Die Filterelemente 8 können als Plattenfilter ausgebildet sein, wobei ein Plattenfilter ein Verhältnis von Länge bzw. Breite zu Dicke von >>1 aufweist. Vorzugsweise kann der Plattenfilter eine rechteckige Filtrationsfläche aufweisen, wobei gemäß der in Fig. 1 dargestellten bevorzugten Ausführungsform die Filterelemente 8 sich in Längsrichtung in den Rotationsraum 20 erstrecken. Grundsätzlich ist es natürlich auch möglich, daß es sich bei dem Filterelement 8 um ein rohrförmiges Filterelement handelt. Die Mantelfläche 8a des Filterelements 8 ist um den Winkel Δ gegenüber der Rotationsachse Y der Hohlwelle 4 gedreht. Hier sind beliebige Winkel zwischen 0 und 60° möglich. Die Winkelstellung des Filterelements 8 gegenüber der Rotationsachse Y ist in Fig. 1a exemplarisch dargestellt. Dieses Merkmal trägt zu einer hohen Filtrationsleistung bei.

Die Filterelemente 8 können in radialer Richtung eine rechteckige oder tragflächenförmige Querschnittsform aufweisen, wie dies in den Fig. 1a bis 1c dargestellt ist. Die Stromlinienform trägt zu einer intensiven Überströmung des Filterelementes 8 ohne Strömungsschatten bei, was die Ablösung von Filterkuchenbestandteilen von der gesamten Oberfläche des Filterelementes 8 verstärkt. Jedes Filterelement 8 weist zumindest einen innenliegenden Filterkanal 13 zur Ableitung von Permeat auf. Bei den in den Fig. 1a und 1c dargestellten Ausführungsformen eines Filterelementes 8 ist lediglich ein Filterkanal 13 in jedem Filterelement 8 vorgesehen, während bei der in der Fig. 1b dargestellten Ausführungsform eines Filterelementes 8 eine Mehrzahl von Filterkanälen 13 vorgesehen sind, die vorzugsweise in regelmäßigen Abständen angeordnet sind. Wesentlich ist aber, daß die Anordnung der Sammelkanäle 13 bzw. der zur Ableitung des Permeats im Inneren des Filterelementes 8 vorgesehene Freiraum ausreichend groß ist, um das durch die Filtrationsfläche des Filterelementes 8 in das Innere permeierende Permeat abzuleiten, gleichzeitig aber die Festigkeit des Filterelementes 8 in nur geringem Maße beeinträchtigt. Die Querschnittsform des Sammelkanals 13 bzw. die Anzahl von Sammelkanälen 13 in einem Filterelement 8 muß so gewählt sein, daß die Stabilität der Filterelemente 8 bei einseitiger Einspannung in der Hohlwelle 4 bzw. den Träger während der Rotationsbewegung der Filtereinrichtung 1 zu keiner mechanischen Beschädigung der Filterelemente 8 führt.

Zur Ableitung des Permeats ist weiter vorgesehen, daß der Filterkanal 13 eines Filterelementes 8 mit dem Inneren der Hohlwelle 4 kommunizierend verbunden ist. Ist das Filterelement 8 auf einem Verbindungselement gelagert, so kann das Verbindungselement einen Sammelkanal aufweisen, der zur Ableitung des Permeats aus dem Filterkanal 13 dient. Der Sammelkanal kann daher kommunizierend mit dem Inneren der Hohlwelle 4 verbunden sein. Der Filterkanal 13 ist vorzugsweise an einem freien Ende 21 des Filterelementes 8 gegenüber dem Rotationsraum 20 abgeschlossen. Werden beispielsweise die Filterelemente 8 durch Extrudieren hergestellt, ist es in einfacher Weise möglich, die Filterelemente 8 an einem Ende nach dem Extrudieren abzudrücken, so daß der im Inneren des Filterelementes 8 verlaufende Filterkanal 13 gegenüber der Umgebung an einem Ende des Filterelementes 8 abgeschlossen wird. Grundsätzlich ist es jedoch auch möglich, daß der Filterkanal 13 in der Art einer Durchgangsbohrung das Filterelement 8 durchläuft, wobei an einem Ende des Filterelementes 8 die Austrittsöffnung des Filterkanals 13 durch ein Verschlußmittel, wie beispielsweise einen Deckel o. dgl., verschlossen sein kann. Das Verschlußmittel kann porös oder aber auch nicht porös ausgebildet sein. Darüber hinaus können die einzelnen Filterelemente 8 in einer Ebene oder aber auch zueinander schräg gestellt angeordnet sein, um eine besonders günstige Strömungsführung zu erreichen.

Die Filterelemente 8 als solche können aus Kunststoff, Edelstahl und/oder aus Keramik hergestellt werden. Keramikmembranen zeichnen sich durch die chemischen Merkmale einer anorganischen Membran aus und haben eine sehr glatte Oberfläche, was dazu beiträgt, daß die Bildung eines Filterkuchens auf der Oberfläche der Membranen per se nur in geringem Umfang stattfindet. Darüber hinaus ist der gebildete Filterkuchen leichter ablösbar. Keramische Filtermaterialen zeichnen sich darüber hinaus durch eine hohe thermische Stabilität, chemische Beständigkeit im gesamten pH-Bereich und eine hohe Stabilität gegenüber bakteriellem Angriff aus.

Eine besonders bevorzugte Ausführungsform der Erfindung sieht vor, daß als Filterelemente 8 Hohlfasern vorgesehen werden. Besonders bevorzugt werden Hohlfasern mit einem Außendurchmesser von 1 bis 2 mm, vorzugsweise von etwa 1,5 mm und mit einem Innendurchmesser von 0,6 bis 1,6 mm, vorzugsweise von etwa 1,1 mm eingesetzt. Die Porengröße der Hohlfaser kann 0,1 bis 1,0 µm, vorzugsweise 0,2 bis 0,8 µm betragen. Wesentlich dabei ist, daß die Hohlfaser eine ausreichende mechanische Stabilität aufweist, so daß es bei der Rotation der Filterelemente in dem zu filtrierenden Fluid zu keiner Beschädigung der Filterelement kommt.

Die erfindungsgemäße Filtereinrichtung 1 ist vorzugsweise zur Filtration fließfähiger Medien vorgesehen, kann grundsätzlich jedoch auch zur Filtration gasförmiger Fluide eingesetzt werden. Die dargestellte erfindungsgemäße Filtereinrichtung 1 läßt sich unter anderem für folgende Trennprobleme einsetzen:
- Emulsionsspaltung, Behandlung von Kühlschmierstoffen, Aufbereitung ölhaltiger Waschlaugen,
- Filtration von Prozeßmedien, Galvanikbadreinigung, Separation von Schleifstäuben und
- Aufbereitung von korrosiven Medien in Kombination mit erhöhten Betriebstemperaturen.

Darüber hinaus finden sich Anwendungsgebiete in verschiedenen Branchen, wie insbesondere
- Umwelttechnik und Abwasseraufbereitung,
- Lebensmittel- und Biotechnik,
- Pharmazie und
- Chemie.

Andere Einsatzbereiche und Anwendungsgebiete sind ohne weiteres möglich.

In jedem Fall weisen die Filterelemente 8 einen innenliegenden Filterkanal 13 auf, der zur Ableitung des Permeats 10 vorgesehen ist. Weist das Filterelement 8 eine Querschnittsform auf, die einem Tragflügel ähnelt, kann durch die Umströmung des Filterelements 8 in besonders vorteilhafter Weise auf die Ablösung von Filterkuchenpartikeln von der Oberfläche des Filterelementes 8 eingewirkt werden. Die einem Fachmann bekannten Gesetzmäßigkeiten der Strömungsmechanik können dabei der Gestaltung der Querschnittsform des Filterelementes 8 zu Grunde gelegt werden. Ziel ist es, Strömungsschatten zu vermeiden, um einen Abtrag des Filterkuchens am gesamten Umfang zu erzielen.

## Patentansprüche

1. Filtereinrichtung (1) zur Filtration eines strömenden Fluides mit einer Mehrzahl von als Plattenfilter ausgebildeten Filterelementen (8) zur Anordnung in einem von dem Fluid durchströmten Gehäuse (3), wobei die Filterelemente (8) an einem Träger (7) fixiert sind und der Träger (7) rotierbar in dem Fluid angeordnet ist, wobei die Filterelemente (8) endseitig mit einem Ende (19) auf dem Träger (7) gelagert bzw. mit diesem verbunden sind, wobei sich die Filterelemente (8) in radialer Richtung ausgehend von dem Träger (7) in einen den Träger umgebenden Rotationsraum (20) erstrecken und wobei die Filterelemente (8) bereichsweise über den Umfang des Trägers (7) verteilt angeordnet sind, so daß sich eine propellerförmige Anordnung der Filterelemente (8) auf dem Träger (7) ergibt, **dadurch gekennzeichnet, daß** die Mantelfläche (8a) des Filterelementes (8) um einen Winkel (Δ) von ≤ 60° gegenüber der Rotationsachse (Y) des Trägers (7) gedreht ist.

2. Filtereinrichtung (1) nach Anspruch 1, **dadurch gekennzeichnet, daß** die Filterelemente (8) in radialer Richtung einen tragflächenförmigen Querschnitt mit nach außen gewölbten Mantelflächen (8a) aufweisen.

3. Filtereinrichtung (1) nach Anspruch 1 oder 2, **dadurch gekennzeichnet, daß** der Träger (7) als Hohlwelle (4) ausgebildet ist und daß der Filterkanal (13) eines Filterelementes (8) mit dem Inneren der Hohlwelle (4) kommunizierend verbunden ist.

4. Filtervorrichtung (2) mit wenigstens einer in einem Gehäuse (3) angeordneten Filtereinrichtung (1) nach einem der vorhergehenden Ansprüche 1 bis 3.

## Claims

1. Filter device (1) for filtering a flowing fluid, comprising a plurality of filter elements (8) formed as plate filters, for arrangement in a housing (3) through which the fluid flows, the filter elements (8) being fixed on a carrier (7) and the carrier (7) being arranged rotatably in the fluid, the filter elements (8) being mounted with one end (19) on the carrier (7) or connected to it, the filter elements (8) extending in the radial direction from the carrier (7) into a rotational space (20) surrounding the carrier, and the filter elements (8) being arranged such that they are distributed in certain regions over the circumference of the carrier (7), so that a propeller-like arrangement of the filter elements (8) is obtained on the carrier (7), **characterized in that** the lateral surface (8a) of the filter element (8) is turned by an angle (Δ) of ≤ 60° with respect to the axis of rotation (Y) of the carrier (7).

2. Filter device (1) according to Claim 1, **characterized in that** the filter elements (8) have in the radial direction an aerofoil-like cross section with outwardly curved lateral surfaces (8a).

3. Filter device (1) according to Claim 1 or 2, **characterized in that** the carrier (7) is formed as a hollow shaft (4) and **in that** the filter channel (13) of a filter element (8) is connected in a communicating manner to the interior of the hollow shaft (4).

4. Filter apparatus (2) with at least one filter device (1) according to one of the preceding Claims 1 to 3, arranged in a housing (3).

## Revendications

1. Dispositif de filtration (1) pour filtrer un fluide en mouvement, comprenant une pluralité d'éléments de filtre (8) réalisés sous forme de filtres à plaques devant être disposé dans un boîtier (3) parcouru par le fluide, les éléments de filtre (8) étant fixés sur un support (7) et le support (7) étant disposé de manière à pouvoir tourner dans le fluide, les éléments de filtre (8) étant montés du côté de l'extrémité, par une extrémité (19), sur le support (7) ou étant connectés à ce dernier, les éléments de filtre (8) s'étendant dans la direction radiale depuis le support (7) dans un espace de rotation (20) entourant le support et les éléments de filtre (8) étant disposés de manière répartie par portion sur la périphérie du support (7), de sorte qu'un agencement en forme d'hélice des éléments de filtre (8) sur le support (7) soit réalisé, **caractérisé en ce que** la surface d'enveloppe (8a) de l'élément de filtre (8) est tournée d'un angle (Δ) ≤ 60° par rapport à l'axe de rotation (Y) du support (7).

2. Dispositif de filtration (1) selon la revendication 1, **caractérisé en ce que** les éléments de filtre (8) présentent, dans la direction radiale, une section transversale en forme de surface porteuse avec des surfaces d'enveloppe (8a) cintrées vers l'extérieur.

3. Dispositif de filtration (1) selon la revendication 1 ou 2, **caractérisé en ce que** le support (7) est réalisé sous forme d'arbre creux (4) et **en ce que** le canal de filtration (13) d'un élément de filtre (8) est connecté de manière à communiquer avec l'intérieur de l'arbre creux (4).

4. Appareil de filtration (2) comprenant au moins un dispositif de filtration (1) disposé dans un boîtier (3) selon l'une quelconque des revendications 1 à 3.
